# EUROPÄISCHE PATENTSCHRIFT

(11) **EP 0 992 404 B1**
(45) Veröffentlichungstag und Bekanntmachung des Hinweises auf die Patenterteilung: **07.01.2004**
(21) Anmeldenummer: 99117739.5
(22) Anmeldetag: 09.09.1999
(51) Int. Cl.: B60R 21/16

(54) **Airbag-Einrichtung**
Airbag device
Dispositif de coussin de sécurité

(30) Priorität: 10.10.1998 DE 19846822
(43) Veröffentlichungstag der Anmeldung: 12.04.2000
(73) Patentinhaber: DaimlerChrysler AG, 70567 Stuttgart (DE)
(72) Erfinder: Henkel, Jörg, 73033 Gröppingen (DE); Reiter, Friedrich, 71069 Sindelfingen (DE); Rudolf, Harald, 72072 Tübingen (DE)

(56) Entgegenhaltungen:
- GB-A- 2 311 043
- US-A- 5 140 799
- US-A- 5 398 968
- US-A- 5 472 233
- "AIR BAG FOLDING METHOD" RESEARCH DISCLOSURE,GB,INDUSTRIAL OPPORTUNITIES LTD. HAVANT, Nr. 411, Juli 1998 (1998-07), Seiten 879-880, XP000824783 ISSN: 0374-4353
- PATENT ABSTRACTS OF JAPAN vol. 1998, no. 01, 30. Januar 1998 (1998-01-30) & JP 09 254733 A (TOYOTA MOTOR CORP), 30. September 1997 (1997-09-30)

## Beschreibung

Die Erfindung betrifft eine Airbag-Einrichtung für ein Fahrzeug, mit den Merkmalen des Oberbegriffs des Anspruchs 1.

Durch das im zusammengefalteten Zustand engliegende, stark aneinander gepresste Gewebe kommt es in den ersten Millisekunden nach dem Beginn des Aufblasvorgangs zu einem starken Druckanstieg. Bei diesem Druckanstieg wird das Gewebe des zusammengefalteten Luftsacks einer enormen Belastung ausgesetzt. Hinzukommt, dass in dieser Phase auch noch die Abdeckung der Airbag-Einrichtung im Lenkrad oder in der Instrumententafel geöffnet werden muss. Dabei entsteht ein so hoher Druck, dass ein Insasse, der sich in der Nähe der sich öffnenden Abdeckung befindet, gefährdet sein könnte.

Aus dem Stand der Technik ist eine ganze Reihe unterschiedlicher Airbag-Einrichtungen der eingangs genannten Art bekannt. So sind z.B. aus der DE 20 08 225, der DE 21 25 967, der DE 23 30 745, der DE 39 10 337, der DE 41 37 719 und der DE 42 39 035 Airbag-Einrichtungen bekannt, bei denen der Luftsack im zusammengefalteten Zustand in einer sogenannten Zickzack-Faltung gefaltet ist. Bei der sogenannten Zickzack-Faltung liegen die Falten quer zu der Entfaltungsrichtung. Außerdem ist aus der DE 896 312, der DE 21 22 018 und DE 42 44 558 eine sogenannten Raff-Faltung bekannt. Bei der sogenannten Raff-Faltung sind die Falten des Luftsacks im zusammengefalteten Zustand in der Entfaltungsrichtung angeordnet. Eine weitere Faltungsform ist die sogenannte Roll-Faltung, bei der die Falten des Luftsacks im zusammengefalteten Zustand aufeinander aufgewickelt sind.

Außerdem ist aus der EP-A-0 839 692 und der US-A-5,398,968 jeweils eine Airbag-Einrichtung bekannt, in welcher der Luftsack gefaltet angeordnet ist. Dabei befindet sich aber der bei aufgeblasenem Luftsack am weitest entfernt liegende Abschnitt des Luftsackes in dessen zusammengefaltetem Zustand unmittelbar am Auslass des Gasgenerators. Ein derart gefalteter Luftsack wird nicht optimal entfaltet, da die vom Treibgas ausgehenden Kräfte auch gleich auf den entferntest liegenden Abschnitt des Luftsackes einwirken.

Die gattungsbildende GB-A-2 311 043 zeigt eine Airbag-Einrichtung, mit einem Luftsack, der unterschiedliche Faltungen aufweist. Dabei soll der noch gefaltete Luftsack zunächst aus dem Gehäuse ausgeschoben und erst außerhalb des Gehäuses entfaltet werden. Dies ist bei der dargestellten Faltung nicht immer gewährleistet, da die den Luftsack aufblasenden Gase in die Hauptfaltung eindringen und den Luftsack bereits im Gehäuse aufblasen kann.

Ausgehend von der GB-A-2 311 043 liegt der Erfindung die Aufgabe zugrunde, die eingangs beschriebene Drucküberhöhung unmittelbar nach dem Auslösen des Airbags zu verringern und den Entfaltungsvorgang des Luftsacks so zu optimieren, dass er außerhalb des Gehäuses entfaltet wird.

Diese Aufgabe wird mit einer Airbag-Einrichtung für ein Fahrzeug gelöst, die die Merkmale des Anspruchs 1 aufweist.

Durch die erfindungsgemäße Lösung wird erreicht, dass in der ersten Phase ein Stück Freiweg möglich ist, und zwar bevor der eigentliche Entfaltungsvorgang stattfindet. Das hat zur Folge, dass in der ersten Phase zunächst die Abdeckung geöffnet wird.

Dafür reicht ein vergleichsweise geringer Druck aus. Erst im Anschluss an das Entfernen der Abdeckung wird der Luftsack außerhalb des Gehäuses vollständig entfaltet.

Dabei sind an dem zu dem Gasgenerator hin offenen Ende des Luftsacks mehrere Primärfalten angeordnet, deren Gesamtlänge im entfalteten Zustand etwas größer als der Abstand von dem Gasgenerator zu der Abdeckung inklusive der Packungslänge des zusammengefalteten Luftsacks ist, dass sich an die Primärfalten mindestens eine Sekundärfalte anschließt, die quer zu der Ausschieberichtung des Luftsacks angeordnet ist, und dass sich an die Sekundärfalten Tertiärfalten anschließen, die den größten Teil des zusammengefalteten Luftsacks ausmachen. Dadurch wird das Prinzip Kolben/Zylinder verwirklicht. Dabei stellen die Tertiärfalten, die im zusammengefalteten Zustand von der mindestens einen Sekundärfalte abgeschirmt werden, den Kolben dar. Dieser Kolben wird in der ersten Entfaltungsphase aus dem den Zylinder bildenden Gehäuse herausgeschoben. Dadurch wird ein besonders schnelles Öffnen und schnelles Positionieren des Airbags ermöglicht.

Eine weitere besondere Ausführungsart der Erfindung ist dadurch gekennzeichnet, dass die Primärfalten so gefaltet sind, dass sie vor dem Aufblasen des Luftsacks zumindest teilweise an dem Gehäuse anliegen. Diese Faltungsart hat den Vorteil, dass sie besonders platzsparend ist.

Alternativ können die Primärfalten auch in Form einer Zickzack-Faltung oder in Form einer Raff-Faltung gefaltet sein. Bei der Zickzack-Faltung können sich die Falten entweder über die gesamte oder nur einen Teil der Ausdehnung des Gehäuses quer zu der Entfaltungsrichtung erstrecken. In Anbetracht des oft störrischen Luftsackmaterials hat sich eine Faltung über die komplette Gehäusebreite in der Durchführung als einfacher und schneller erwiesen.

Die Tertiärfalten können in Form einer Zickzack-Faltung, einer Raff-Faltung oder einer Roll-Faltung gefaltet sein. Dabei kommt es entscheidend darauf an, dass zwischen den Tertiärfalten und dem Gasgenerator mindestens eine Sekundärfalte quer zu der Ausschieberichtung des Luftsacks angeordnet ist. Nur so kann das Prinzip Kolben/Zylinder verwirklicht werden, wobei die mindestens eine Sekundärfalte die Kolbenfläche bildet.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. In der Zeichnung zeigt:
- Figur 1: eine schematische Darstellung einer Airbag-Einrichtung gemäß einer ersten Ausführungsform der vorliegenden Erfindung;
- Figur 2: eine schematische Darstellung einer Airbag-Einrichtung gemäß einer zweiten Ausführungsform der vorliegenden Erfindung;
- Figur 3: eine schematische Darstellung einer Airbag-Einrichtung gemäß einer dritten Ausführungsform der vorliegenden Erfindung; und

Figur 4 eine schematische Darstellung der in den Figuren 1 bis 3 gezeigten Ausführungsformen in der ersten Phase des Entfaltens des Luftsacks.

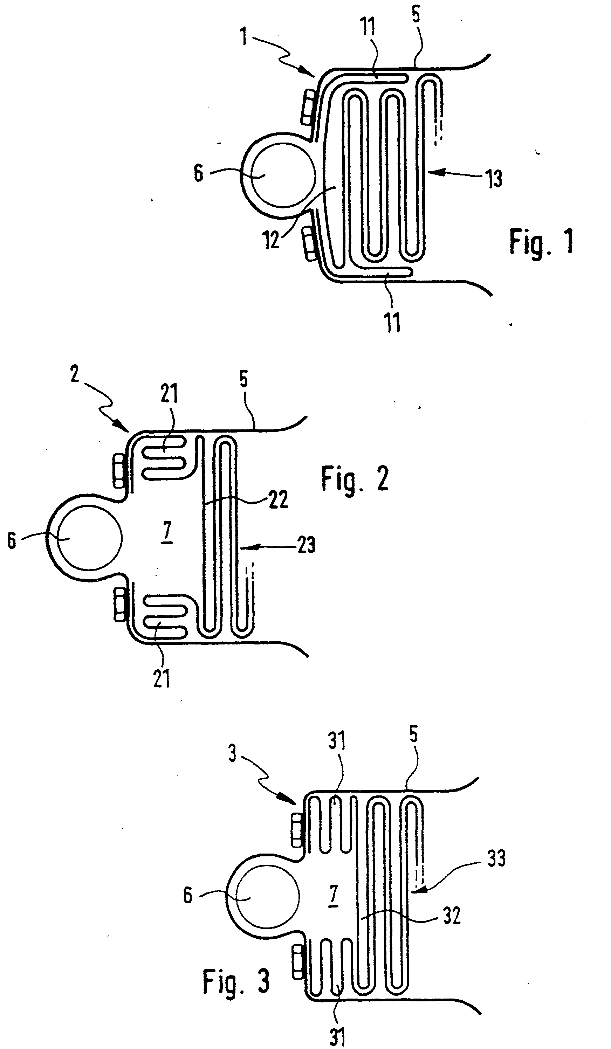

In den Figuren 1 bis 4 sind drei unterschiedliche Ausführungsformen 1 bis 3 der erfindungsgemäßen Airbag-Einrichtung dargestellt. Zur Vereinfachung sind gleiche Teile mit gleichen Bezugszeichen versehen. Die in den Figuren 1 bis 4 dargestellten Airbag-Einrichtungen 1 bis 3 umfassen jeweils ein Gehäuse 5. In dem Gehäuse 5 ist ein Gasgenerator 6 untergebracht. Bei dem Gasgenerator 6 kann es sich bspw. um einen pyrotechnischen Gasgenerator handeln. Bei einem Fahrzeugaufprall bläst der Gasgenerator 6 einen Luftsack auf, der im Gehäuse 5 untergebracht ist. Der Luftsack wird komplett gefüllt, bevor ein Insasse ihn berührt. Durch das Auftreffen des Insassen wird der Luftsack teilweise wieder entleert und dabei die Aufprallenergie des Insassen mit physiologisch hinnehmbaren Flächenpressungs- und Verzögerungswerten in sanfter Art und Weise absorbiert.

In Figur 1 befindet sich der Luftsack im zusammengefalteten Zustand in dem Gehäuse 5. Primärfalten 11 sind an die Wandung des Gehäuses 5 angelegt. Quer zu der Entfaltungsrichtung des Luftsacks schließt sich an die Primärfalten 11 eine Sekundärfalte 12 an. Der Luftsack setzt sich in Tertiärfalten 13 fort, die zickzackförmig quer zu der Entlastungsrichtung in dem Gehäuse 5 untergebracht sind. Im Normalzustand ist das Gehäuse 5 durch eine (nicht dargestellte) Abdeckung verschlossen.

Bei der in Figur 2 dargestellten Ausführungsform sind Primärfalten 21 zickzackförmig parallel zur Entfaltungsrichtung angeordnet. Diese Art der Faltung der Primärfalten 21 wird auch als Raff-Faltung bezeichnet. An die Primärfalten 21 schließt sich eine Sekundärfalte 22 an, die quer zur Entfaltungsrichtung des Luftsacks verläuft. Die quer zur Entfaltungsrichtung verlaufende Sekundärfalte 22 bildet, wie die Sekundärfalte 12 in Figur 1, eine Art Kolbenfläche. An die Sekundärfalte 22 schließen sich Tertiärfalten 23 in Zickzack-Faltung an.

Bei der in Figur 3 dargestellten Ausführungsform sind Primärfalten 31, eine Sekundärfalte 32 und Tertiärfalten 33 zickzackförmig quer zur Entfaltungsrichtung des Luftsacks gefaltet. Die Primärfalten 31 erstrecken sich jedoch nicht über die gesamte Ausdehnung des Gehäuses 5 quer zur Entfaltungsrichtung des Luftsacks. Stattdessen ist, wie bei der in Figur 2 dargestellten Ausführungsform, an dem Gasaustritt des Gasgenerators 6 ein Freiraum 7 ausgebildet. Dadurch wird ein Entfalten des Luftsacks in der gewünschten Art und Weise erreicht.

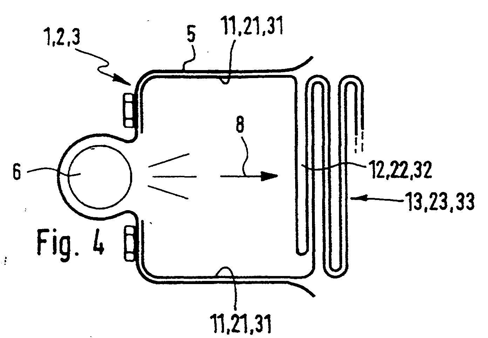

In Figur 4 ist die jeweils in den Figuren 1 bis 3 dargestellte Airbag-Einrichtung während des Entfaltens dargestellt. Die Entfaltungsrichtung bzw. Ausschieberichtung des Luftsacks ist durch eine Pfeil 8 angedeutet. Bei dem in Figur 4 dargestellten Zustand befinden sich die Primärfalten 11, 21, 31 im entfalteten Zustand. Die Sekundärfalte 12, 22, 32 und die Tertiärfalten 13, 23, 33 sind noch im zusammengefalteten Zustand.

## Patentansprüche

1. Airbag-Einrichtung für ein Fahrzeug, mit einem zusammengefalteten Luftsack, der in einem Gehäuse (5) hinter einer Abdeckung im Fahrzeug untergebracht ist und bei einem Fahrzeugaufprall mit Hilfe eines Gasgenerators (6) aufgeblasen wird, wobei der Luftsack im zusammengefalteten Zustand so gefaltet ist, dass er sich beim Aufblasen in zwei Phasen entfaltet, wobei in der ersten Phase des Entfaltens der größtenteils noch zusammengefaltete Luftsack aus dem Gehäuse (5) herausgeschoben und die Abdeckung entfernt wird, und in der zweiten Phase des Entfaltens der eigentliche Entfaltungsvorgang des Luftsacks stattfindet, wobei der Luftsack nacheinander Primärfalten (11, 21, 31), Sekundärfalten (12, 22, 32) und Tertiärfalten (13, 23, 33) aufweist, und in den jeweiligen Falten die jeweiligen Abschnitte des Luftsackes direkt aufeinander oder aneinander anliegen, wobei an dem zum Gasgenerator (6) hin offenen Ende des Luftsacks die mehreren Primärfalten (11, 21, 31) angeordnet sind, deren Gesamtlänge im entfalteten Zustand etwas größer als der Abstand von dem Gasgenerator (6) zu der Abdeckung inklusive der Packungslänge des zusammengefalteten Luftsacks ist, wobei sich an die Primärfalten (11, 21, 31) die mindestens eine Sekundärfalte (12, 22, 32) anschließt, die quer zu der Ausschieberichtung (8) des Luftsacks angeordnet ist, und wobei sich an die Sekundärfalte (12, 22, 32) die Tertiärfalten (13, 23, 33) anschließen, die den größten Teil des zusammengefalteten Luftsacks ausmachen, **dadurch gekennzeichnet, dass** die Tertiärfalten (13, 23, 33) einen Kolben bilden, der von der mindestens einen Sekundärfalte (12, 22, 32) abgeschirmt wird.

2. Airbag-Einrichtung nach Anspruch 1, **dadurch gekennzeichnet, dass** die Primärfalten (11) so gefaltet sind, dass sie vor dem Aufblasen zumindest teilweise an dem Gehäuse (5) anliegen.

3. Airbag-Einrichtung nach Anspruch 2, **dadurch gekennzeichnet, dass** die Tertiärfalten (13, 23, 33) in Form einer Zickzack-Faltung gefaltet sind.

4. Airbag-Einrichtung nach Anspruch 2, **dadurch gekennzeichnet, dass** die Tertiärfalten in Form einer Raff-Faltung gefaltet sind.

5. Airbag-Einrichtung nach Anspruch 2, **dadurch gekennzeichnet, dass** die Tertiärfalten in Form einer Roll-Faltung gefaltet sind.

6. Airbag-Einrichtung nach Anspruch 1, **dadurch gekennzeichnet, dass** die Primärfalten (31) in Form einer Zickzack-Faltung gefaltet sind.

7. Airbag-Einrichtung nach Anspruch 6, **dadurch gekennzeichnet, dass** die Tertiärfalten (33) in Form einer Zickzack-Faltung gefaltet sind.

8. Airbag-Einrichtung nach Anspruch 6, **dadurch gekennzeichnet, dass** die Tertiärfalten (23) in Form einer Raff-Faltung gefaltet sind.

9. Airbag-Einrichtung nach Anspruch 6, **dadurch gekennzeichnet, dass** die Tertiärfalten in Form einer Roll-Faltung gefaltet sind.

10. Airbag-Einrichtung nach Anspruch 1, **dadurch gekennzeichnet, dass** die Primärfalten (21) in Form einer Raff-Faltung gefaltet sind.

11. Airbag-Einrichtung nach Anspruch 10, **dadurch gekennzeichnet, dass** die Tertiärfalten (23) in Form einer Zickzack-Faltung gefaltet sind.

12. Airbag-Einrichtung nach Anspruch 10, **dadurch gekennzeichnet, dass** die Tertiärfalten in Form einer Raff-Faltung gefaltet sind.

13. Airbag-Einrichtung nach Anspruch 10, **dadurch gekennzeichnet, dass** die Tertiärfalten in Form einer Roll-Faltung gefaltet sind.

## Claims

1. An airbag device for a vehicle with a folded airbag which is accommodated in a housing (5) behind a covering in the vehicle and is inflated by means of a gas generator (6) in the event of a vehicle impact, the airbag being folded in the folded state in such a manner that it unfolds in two phases when inflated, the largely still folded airbag being pushed out of the housing (5) and the covering being removed in the first phase of unfolding and the actual unfolding process of the airbag taking place in the second phase of unfolding, the airbag having consecutive primary folds (11, 21, 31), secondary folds (12, 22, 32) and tertiary folds (13, 23, 33) and the various sections of the airbag being positioned directly on top of or adjacent to one another in the respective folds, the several primary folds (11, 21, 31) being positioned at the end of the airbag open to the gas generator (6), their total length in the unfolded state being somewhat greater than the distance between the gas generator (6) and the cover including the packing length of the folded airbag, the at least one secondary fold (12, 22, 32) positioned at right angles to the direction (8) in which the airbag is pushed out being joined to the primary folds (11, 21, 31), and the tertiary folds (13, 23, 33) which represent the greater part of the folded airbag being joined to the secondary folds (12, 22, 32),
**characterised in that**
the tertiary folds (13, 23, 33) form a piston which is shielded by the at least one secondary fold (12, 22, 32).

2. An airbag device in accordance with claim 1,
**characterised in that**
the primary folds (11) are folded such that at least some of them they lie adjacent to the housing (5) prior to inflation.

3. An airbag device in accordance with claim 2,
**characterised in that**
the tertiary folds (13, 23, 33) are folded in a concertina fold arrangement.

4. An airbag device in accordance with claim 2,
**characterised in that**
the tertiary folds are folded in a gathered fold arrangement..

5. An airbag device in accordance with claim 2,
**characterised in that**
the tertiary folds are folded in a rolled fold arrangement.

6. An airbag device in accordance with claim 1,
**characterised in that**
the primary folds (31) are folded in a concertina fold arrangement.

7. An airbag device in accordance with claim 6
**characterised in that**
the tertiary folds (33) are folded in a concertina fold arrangement.

8. An airbag device in accordance with claim 6
**characterised in that**
the tertiary folds (23) are folded in a gathered fold arrangement.

9. An airbag device in accordance with claim 6,
**characterised in that**
the tertiary folds are folded in a rolled fold arrangement.

10. An airbag device in accordance with claim 1,
**characterised in that**
the primary folds (21) are folded in a gathered fold arrangement.

11. An airbag device in accordance with claim 10,
**characterised in that**
the tertiary folds (23) are folded in a concertina fold arrangement.

12. An airbag device in accordance with claim 10,
**characterised in that**
the tertiary folds are folded in a gathered fold arrangement.

13. An airbag device in accordance with claim 10,
**characterised in that**
the tertiary folds are folded in a rolled fold arrangement.

## Revendications

1. Dispositif de coussin de sécurité pour un véhicule automobile, comprenant un coussin gonflable plié, qui est logé dans le véhicule dans un boîtier (5) derrière un cache et qui, au moment d'une collision, est gonflé au moyen d'un générateur de gaz (6), le coussin gonflable à l'état plié étant plié de telle sorte que, au moment du gonflage, il se déplie en deux phases, sachant qu'au cours de la première phase de dépliage, la plus grande partie du coussin gonflable encore plié est poussée hors du boîtier (5) et le cache est enlevé, et au cours de la deuxième phase de dépliage se produit le processus de dépliage proprement dit, le coussin gonflable comportant successivement des plis primaires (11, 21, 31), des plis secondaires (12, 22, 32) et des plis tertiaires (13, 23, 33) et les parties correspondantes du coussin gonflable étant directement superposées ou juxtaposées dans les plis correspondants, sachant qu'au niveau de l'extrémité du coussin gonflable ouverte vers le générateur de gaz (6) est agencée la pluralité de plis primaires (11, 21, 31), dont la longueur totale à l'état déplié est supérieure à la distance entre le générateur de gaz (6) et le cache, y compris la longueur de tassement du coussin gonflable plié, le au moins un pli secondaire (12, 22, 32), qui est agencé transversalement par rapport à la direction d'extraction (8) du coussin gonflable, étant abouté aux plis primaires (11, 21, 31) et les plis tertiaires (13, 23, 33), qui constituent la plus grande partie du coussin gonflable plié, étant aboutés au pli secondaire (12, 22, 32), **caractérisé en ce que** les plis tertiaires (13, 23, 33) forment un piston, qui est protégé par le au moins un pli secondaire (12, 22, 32).

2. Dispositif de coussin de sécurité selon la revendication 1, **caractérisé en ce que** les plis primaires (11) sont pliés de telle sorte que, avant le gonflage, ils sont au moins en partie en appui contre le carter (5).

3. Dispositif de coussin de sécurité selon la revendication 2, **caractérisé en ce que** les plis tertiaires (13, 23, 33) sont pliés en forme de plis en zigzags.

4. Dispositif de coussin de sécurité selon la revendication 2, **caractérisé en ce que** les plis tertiaires sont pliés en forme de plis drapés.

5. Dispositif de coussin de sécurité selon la revendication 2, **caractérisé en ce que** les plis tertiaires sont pliés en forme de plis enroulés.

6. Dispositif de coussin de sécurité selon la revendication 1, **caractérisé en ce que** les plis primaires (31) sont pliés en forme de plis en zigzags.

7. Dispositif de coussin de sécurité selon la revendication 6, **caractérisé en ce que** les plis tertiaires (33) sont pliés en forme de plis en zigzags.

8. Dispositif de coussin de sécurité selon la revendication 6, **caractérisé en ce que** les plis tertiaires (23) sont pliés en forme de plis drapés.

9. Dispositif de coussin de sécurité selon la revendication 6, **caractérisé en ce que** les plis tertiaires sont pliés en forme de plis enroulés.

10. Dispositif de coussin de sécurité selon la revendication 1, **caractérisé en ce que** les plis primaires (21) sont pliés en forme de plis drapés.

11. Dispositif de coussin de sécurité selon la revendication 10, **caractérisé en ce que** les plis tertiaires (23) sont pliés en forme de plis en zigzags.

12. Dispositif de coussin de sécurité selon la revendication 10, **caractérisé en ce que** les plis tertiaires sont pliés en forme de plis drapés.

13. Dispositif de coussin de sécurité selon la revendication 10, **caractérisé en ce que** les plis tertiaires sont pliés en forme de plis enroulés.
